Europäisches Patentamt

European Patent Office

Office européen des brevets

(19)

(11) Veröffentlichungsnummer: **0 093 871**
**B1**

(12) **EUROPÄISCHE PATENTSCHRIFT**

(45) Veröffentlichungstag der Patentschrift:
26.02.86

(51) Int. Cl.⁴: **C 08 J 9/36, C 08 L 23/02 //**
**C08J9/10 ,(C08L23/02, 67:06)**

(21) Anmeldenummer: 83103010.1

(22) Anmeldetag: 26.03.83

(54) Dielektrisch erwärmbarer Polyolefinschaum.

(30) Priorität: 11.05.82 IT 2119182

(43) Veröffentlichungstag der Anmeldung:
16.11.83 Patentblatt 83/46

(45) Bekanntmachung des Hinweises auf die Patenterteilung:
26.02.86 Patentblatt 86/9

(84) Benannte Vertragsstaaten:
AT BE CH DE FR GB IT LI LU NL SE

(56) Entgegenhaltungen:
FR - A - 2 088 380
FR - A - 2 325 682

(73) Patentinhaber: BAYER AG, Konzernverwaltung RP
Patentabteilung, D-5090 Leverkusen 1 Bayerwerk (DE)

(72) Erfinder: Pellicelli, Bruno, Via Parini 1, I-24030 Mapello
(IT)

## Beschreibung

Gegenstand der Erfindung sind dielektrisch verschweiß-bare Polyolefinschäume, die in Gegenwart von ungesättigten Polyesterharzen hergestellt worden sind.

Es ist bereits bekannt, daß bestimmte Kunststoffe mit Hilfe eines elektromagnetischen Feldes hochfrequenzge-schweißt werden können, wobei in diesem Verfahren die Kunststoffmoleküle in Schwingungen versetzt werden und so ohne äußeres Erhitzen oder mit nur geringem äußerem Erhitzen die für den Schweißvorgang erforderliche Wärme in dem Kunststoff selbst erzeugen. Das heißt, daß nur ganz bestimmte Kunststoffe hochfrequenzschweißbar sind, wie beispielsweise Polyvinylchlorid. Polyolefine, insbesondere Polyethylene sind es nicht.

Aber das dielektrische Erwärmen von Polyolefin-Schaumstoffen ist wirtschaftlich sehr interessant, weil dadurch nicht nur ein schonendes Erwärmen des Materials innerhalb veniger Sekunden möglich wird, sondern auch die Elektroden des Hochfrecuenzfeldes gleichzeitig als formgebendes werkzeug benutzt werden können. Es hat nicht an Versuchen gefehlt, auch Polyolefine durch bestimmte Zusätze dielektrisch verschweißbar zu machen.

Unter anderem wurde eine Hochfrequenzverschweißung von Polyethylenen durch Abmischen mit Ethylen/Vinylacetat-Copolymerisaten erreicht.

Derartige Mischungen eignen sich aber nicht zur Herstellung von vernetzten Schäumen, da bei der Herstellung der verschäumbaren und vernetzbaren Bahnen bereits im Extruder Vernetzungen auftreten können.

Weiter ist bekannt, daß durch Zugabe von monomeren Weichmachern wie Dioctylphthalat eine dielektrische Erwärmung bei manchen Kunststoffen ermöglicht werden kann.

Derartige Weichmacher sind jedoch aufgrund ihrer Unverträglichkeit mit Polyolefinen in diese nicht einarbeitbar und stören auch bereits in geringen Mengen die Verschäumung von Polyolefinen.

Weiterhin kann über verschiedene Füllstoffe wie z.B. Bariumferrit, ein dielektrisches Erwärmen von Polyolefinen erreicht werden.

Aber auch diese Zusatzstoffe beeinflussen das Verschäumen von Polyolefinen, so daß Polyolefinschäume mit niedrigen Raumgewichten nicht herstellbar sind.

Auch der Zusatz von chloriertem Polyethylen, das zu einer Verbesserung der Hochfrequenz-Erwärmung führt, bietet sich an. Jedoch reicht dieser Erwärmungseffekt für eine technische Nutzung nicht aus.

Überraschenderweise gelingt es nun durch Modifikation von Polyolefinen mit α, β-ungesättigten Polyestern dielektrisch erwärmbare vorzugsweise verschweißbare Polyolefinschäume, die vernetzt sein können herzustellen.

Gegenstand der Erfindung sind daher dielektrisch erwärmbare vorzugsweise verschweißbare Polyolefinschäume, die α, β-ungesättigte polyester in Mengen von 3-20, vorzugsweise 5-10 Gew.-%, bezogen auf den Schaum enthalten.

Die erfindungsgemäßen Schäume können sowohl nach kontinuierlichen als auch diskontinuierlichen Methoden hergestellt werden, wie sie z.B. in der DE-PS 16 94 130 oder US-PS 37 11 584 beschrieben sind.

Vorzugsweise werden die erfindungsgemäßen Schäume so hergestellt, daß das Vermischen der Polyolefine mit den Schäummitteln, Vernetzungsmitteln, gegebenenfalls üblichen Zusatzstoffen sowie den erfindungsgemäß verwendeten in den obigen Mengen angegebenen Polyestern auf einem Mischwalzwerk oder auf einem Extruder unter nachfolgender Herstellung der Formkörper, wie Platten oder kontinuierlicher Bahnen, bei Temperaturen unterhalb des Zersetzungspunkts des Vernetzungs- und Verschäumungsmittels erfolgt. Die mittlere Verweilzeit in der Mischvorrichtung ist so bemessen, daß eine Vernetzung der zu verschäumenden Mischung in diesem Stadium im wesentlichen unterbleibt. An-schließend erfolgt die Vernetzung der Polyolefinplatte oder-bahn, vorzugsweise bei Temperaturen unterhalb des Zersetzungspunktes des Schäummittels aber oberhalb des Zersetzungspunktes des Vernetzungsmittels durch Erwarmen oder durch Bestrahlung unter Erhöhung der Schmelzviskosität des Polyolefins. Bei weiterer Temperaturerhöhung bei oder oberhalb der Zersetzungstemperatur des Schäummittels verschäumt der Formkörper. Je nach Menge des Schäummittels, des Vernetzungsmittels und der Verfahrensbedingungen entsteht ein Schaum mit einer Dichte von 15 kg/m$^3$ bis 300 kg/m$^3$, vorzugsweise 20 bis 200 kg/m$^3$.

Bevorzugt wird das erfindungsgemäße Verfahren zur Herstellung fortlaufender Schaumstoffbahnen angewendet, beispielsweise nach dem in der DE-AS 16 94 130 beschriebenen Verfahren, nach dem eine Erhitzung in einem Ofen erfolgt, während die fortlaufende Polyolefinbahn auf einem endlosen Transportband unterstützt wird.

Als Schäummittel wird zweckmäßig ein in der Hitze gasabspaltendes Mittel verwendet, dessen Zersetzungstemperatur höher liegt als diejenige des verwendeten Vernetzungsmittels, vorzugsweise einem organischen Peroxid. Geeignete Schäummittel sind z.B. Azodicarbonamid und/oder p,p'-Oxi-bis-benzolsulfonyl-hydrazid und/oder Dinitrosopentamethylentetramin.

Bevorzugtes Schäummittel ist Azodicarbonamid mit einem Zersetzungspunkt bzw. Zersetzungsbereich ab 190°C. Die angewendete Menge an Schäummittel richtet sich nach der angestrebten Dichte des herzustellenden Schaumstoffs und liegt im allgemeinen zwischen 0,5 bis 25 Gew.-%, vorzugsweise bei 1 bis 20 Gew.-%, bezogen auf die Gesamtmischung.

Die Vernetzung der erfindungsgemäßen Schäume kann in bekannter Weise durch Einwirkung hochenergetischer Strahlen oder mit Hilfe von bekannten Vernetzungsmitteln, vorzugsweise organischen Peroxiden erfolgen.

Als organisches Peroxid können je nach Polyolefinzusammensetzung 2,5-Dimethyl-2,5-di-(tert.-butylperoxy)-

2

hexan, tert.-Butylhydroperoxid, Cumyl-tert.-butylperoxid, Di-tert.-butylperoxid, vorzugsweise Dicumylperoxid verwendet werden. Die Peroxide werden in Mengen von 0,3 bis 1,5 Gew.-% eingesetzt, bezogen auf das Polyolefin.

Als Polyolefine können Polyethylen oder Polypropylen gegebenenfalls auch deren Gemische eingesetzt werden, vorzugsweise Polyethylen und zwar Niederdruck-Polyethylen der Dichte 0,94 bis 0,97 g/cm$^3$ und/oder Hochdruckpolyethylen der Dichte 0,91 bis etwa 0,94 g/cm$^3$, vorzugsweise Hochdruckpolyethylen. Unter der Bezeichnung Polyolefine werden aber auch Polyolefincopolymere verstanden, vorzugsweise solche, zu deren Herstellung Monomerengemische mit überwiegendem Anteil an Polyolefinen verwendet werden.

Solche Copolymere sind z.B. Ethylen-Propylen-Copolymere, Ethylen-Butylen-Copolymere, Copolymerisate aus Ethylen und Acrylsäureestern oder deren Derivaten, Copolymere aus Ethylen und Methacrylsäure oder deren Derivaten. Auch Mischungen der obengenannten Polyolefine mit Kautschuken und/oder Kunststoffen können gemäß der Erfindung zu Schaumstoffen verarbeitet werden. Darunter werden z.B. Mischungen verstanden, die zu 50 Gew.-% und mehr aus Polyolefinen bestehen. Mit Polyolefinen mischbare Kautschuke sind z.B. Naturkautschuk, Ethylen-Propylen-Kautschuk, Butylkautschuk, polyisobutylen, ABS-Kautschuk, Polybutadien, Polybuten und Polyisopren. Mit Polyolefinen mischbare Kunststoffe sind z.B. Polystyrol, chloriertes Polyethylen oder sulfochloriertes Polyethylen oder dergleichen.

Als Modifikatoren kommen α ,β-ungesättigte Polyester in Frage.

Bevorzugte α, β-ungesättigte Polyester sind die bekannten Polykondensationsprodukte aus mindestens einer α β9-ein-fach ungesättigten Dicarbonsäure mit 4 - 8 C-Atomen oder deren Derivate wie Anhydriden, gegebenenfalls in Abmischung mit bis zu 200 Mol-%, bezogen auf die ungesättigte Dicarbonsäure, wenigstens einer gesättigten aliphatischen oder cycloaliphatischen oder aromatischen Dicarbonsäure mit 8-10 C-Atomen oder deren Derivate mit mindestens einer aliphatischen, cycloaliphatischen oder aromatischen Polyhydroxyverbindung, insbesondere Dihydroxyverbindung mit 2-8 C-Atomen, vorzugsweise sind es Polyester, wie sie bei J. Björksten et al.,"Polyesters and their Applications", Reinhold Publishing Corp., New York 1956, beschrieben sind.

Beispiele für bevorzugt zu verwendende ungesättigte Dicarbonsäuren oder ihre Derivate sind Maleinsäure oder Maleinsäureanhydrid und Fumarsäure. Verwendet werden können jedoch auch Mesaconsäure, Citraconsäure, Itaconskure oder Chlormaleinsäure. Beispiele für die gegebenenfalls mitzuverwendenden aromatischen, gesättigten, aliphatischen oder cycloaliphatischen Dicarbonsäuren oder ihren Derivaten sind Phthalsäure oder Phthalsäureanhydrid, Isophthalsäure, Terephthalsäure, Hexa- oder Tetrahydrophthalsäure bzw. deren Anhydride, Endomethylentetrahydrophthalsäure oder deren Anhydrid, Bernsteinsäure bzw. Bernsteinsäureanhydrid und Bernsteinsäureester und -chloride, Adipinsäure, Sebacinsäure. um schwerentflammbare Harze herzustellen, können auch halogenierte Dicarbonsäuren wie Hexachlorendomethylen-tetrahydrophthalsäure, Tetrachlorphthalsäure oder Tetrabromphthalsäure mitverwendet werden. Als zweiwertige Alkohole können vorzugsweise aliphatische Alkohole mit C$_2$-C$_{20}$ wie Ethylenglykol, Propandiol-1,2, Propandiol-1,3, Diethylenglykol, Dipropylenglykol, Butandiol-1,3, Butandiol-1,4, Neopentylglykol, Hexandiol-1,6, 2,2-Bis-(4-hydroxy-cyclohexyl)-propan, Perhydrobisphenol, als Phenole vorzugsweise Bisoxalkyliertes Bisphenol A, und andere eingesetzt werden. Bevorzugt verwendet werden Ethylenglykol, Propandiol-1,2, Diethylenglykol und Dipropylenglykol.

Weitere Modifikationen sind möglich durch Einbau ein-, drei- und vierwertiger Alkohole mit 1-6 C-Atomen, wie Methanol, Ethanol, Butanol, Allylalkohol, Benzylalkohol, Cyclohexanol und Tetrahydrofurfurylalkohol, Trimethylpropan, Glycerin und Pentaerythrit, von Mono-, Di- und Triallylethern und Benzylethern drei- und mehrwertiger Alkohole mit 3-6 C-Atomen gemäß DE-AS 1 024 654, z.B. Trimethylolpropandiallylether, sowie durch Einbau von Monocarbonsäuren wie Benzoesäure oder Acrylsäure.

Die Säurezahlen der Polyester liegen vorzugsweise zwischen 10 und 100, vorzugsweise zwischen 20 und 70, die OH-Zahlen zwischen 10 und 150, vorzugsweise zwischen 20 und 100, und die als Zahlenmittel bestimmten Molekulargewichte $\bar{M}_n$ zwischen ca. 500 und 5000, vorzugsweise zwischen ca. 1000 und 3000 (dampfdruckosmometrisch gemessen in Dioxan und Aceton).

Als mit den ungesättigten Polyestern copolymerisierbareungesättigte Monomere eignen sich in der Polyestertechnologie gebräuchliche ungesättigte Verbindungen, die bevorzugt α-substituierte Vinyl- oder Vinylidengruppen oder β-substituierte Allylgruppen tragen, bevorzugt Styrol; aber auch beispielsweise kernchlorierte und -alkylierte bzw. alkenylierte Styrole, wobei die Alkylgruppen 1-4 Kohlenstoffatome enthalten können, z.B. Vinyltoluol, Divinylbenzol, α Methylstyrol, tert.-Butylstyrol, Chlorstyrole; Vinylester von Carbonsäuren mit 2-6 Kohlenstoffatomen, bevorzugt Vinylacetat, Vinylpropionat oder Vinylbenzoat, Vinylpyridin, Vinylnaphthalin, Vinylcyclohexan, Acrylsäure und Methacrylsäure und/oder ihre Ester (vorzugsweise Vinyl-, Allylund Methallylester) mit 1-4 Kohlenstoffatomen in der Alkoholkomponente, ihre Amide und Nitrile, Maleinsäureanhydrid, -halb- und -diester mit 1-4 Kohlenstoffatomen in der Alkoholkornponente, -halb- und -diamide oder cyclische Imide, sowie Butylacrylat, Methylmethacrylat, Acrylnitril, N-Methylmaleinimid oder N-Cyclohexylmaleinimid; Allylverbindungen wie Allylbenzol und Allylester wie Allylacetat, phthalsäurediallylester, Isophthalsäurediallylester, Fumarsäurediallylester, Allylcarbonate, Diallylcarbonate, Triallylphosphat und Triallylcyanurat.

Überraschenderweise ermöglicht der Zusatz der ungesättigten Polyester bei der Herstellungsmenge chemisch vernetzter Polyolefinschäume, daß das Vernetzungsmittel vorzugsweise Peroxid, erheblich reduziert werden kann. Vorzugsweise ist der Polyester bis su 100 ausgehärtet.

Außer den wirtschaftlichen Vorteilen führt diese reduzierung dazu, daß die teilweise übelriechenden Zersetzungsprodukte des vorzugsweise verwendeten Dicumylperoxids, z.B. Azetophenon, in weit geringeren Mengen anfallen.

Auch die üblichen Zusatzstoffe, die gewöhnlich zusammen mit Kunststoffen auf Polyolefinbasis verwendet werden, wie z.B. Lichtsc̸ ·tel, Pigmente, Füllstoffe, flammhemmende Mittel, antistatische Mittel, Gleitmittel können dem ⸗⸗ ⸗etzenden und zu verschävmenden Gemisch vor der Verarbeitung zu einem Formkörper zugesetzt werden.

Die erfindungsgemäßen Polyolefinschäume sind dielektrisch erwärmbar und erlauben so eine vorteilhafte weiterverarbeitung nach den an sich bekannten Verfahren unter Ausnutzung des dielektrischen Erwärmens, z.B. Hochfre-quenzschweißen - Verformen - Stanzen bei Frequenzen von etwa 27 MHz. Dadurch können insbesondere temperaturempfindliche Materialien, wie textile Gewebe, mit dem Polyolefinschaum aus einfache weise verschweißt werden.

## Beispiel 1

Auf einem Extruder wird eine Mischung der folgenden Produkte in den angegebenen Gewichtsteilen zu einer platte extrudiert:
Hochdruckpolyethylen — 50 Gew.-Teile
chloriertes Polyethylen — 30 Gew.-Teile
ungesättigter Polyester — 5 Gew.-Teile
Azodicarbonamid — 14.7 Gew.-Teile
Dicumylperoxid — 0,3 Gew.-Teile
Der handelsübliche Polyester wurde durch Polykondensation von Maleinsäureanhydrid, Ethylen, Ethylenglykol, Dipropylenglykol, Benzylalkohol hergestellt.

Die Extrusionstemperatur der Formmasse liegt bei etwa 130°C, so daß weder Verschäumung n .h Vernetzung eintritt.

Die so erhaltene Platte wird in einem Heißluftofen, wie in DE-PS 16 94 130 beschrieben, auf eine Temperatur von, etwa 210°C erwärmt, wodurch sich eine gleichmäßig, verschäumung vernetzte Schaumbahn ergibt.

Die Schaumbahn wird durch Frischluft und Kontakt mit gekühlten Walzen abgekühlt. Der Schaum zeigt eine glatte Oberfläche und hat ein Raumgewicht von 35 kg/m$^3$.

Bei einer nachfolgenden Verarbeitung auf einer handelsüblichen Hochfrequenzschweißmachine mit einer Frequenz von 27,12 MHz und einem Arbeitsdruck von 5 bis 7 bar ist eine einwandfreie Verschweißung des so hergestellten Schaumes mit sich selbst und mit verschiedenentextilen Geweben möglich.

## Beispiel 2

Wie in Beispiel 1 beschrieben wird unter Verminderung der Treibmittelmenge eine polyethylenschaumbahn mit einer Dicke von 3 mm und einer Dichte von 200 kg/m$^3$ hergestellt. Zwischen 2 Schaumbahner wird ein Film aus einem Fthylenvinylacetatcopolymeren mit einer Dicke von 50 µm gelegt und die Bahnen in einer Hochfre: ̤ ⸗zapparatur in 4" bei einer Leistung von 5 kW hochfrequenzver-schweißt. Die Bahnen haften problemlo⸗ und sind praktisch nicht mehr als einzelne Bahnen unterscheidbar.

## Patentansprüche

1. Dielektrisch erwärmbare vorzugsweise verschweißbare polyolefinschäume, dadurch gekennzeichnet, daß sie 3-20 Gew.-%, bezogen auf den Schaum, eines α, β-unge-sättigten Polyesters enthalten.

2. polyolefinschäume nach Anspruch 1, dadurch gekennzeichnet, daß sie 5 - 10 Gew.-% eines α, β-ungesättigten Polyesters ent⸗ ⸗ten.

3. Polyolefinschäume nach ⸗pruch 1 oder 2, dadurch gekennzeichnet, daß der Polyester bis zu 100 % ausgehärtet ist.

4. Polyolefinschäume nach Ansprüchen 1 - 3, dadurch gekennzeichnet, daß sie vernetzt sind.

5. Polyolefinschäume an Ansprüchen 1 - 4. dadurch gekennzeichnet, daß Polyester mit einer Säurezahl zwischen 10 und 100 und einer OH-Zahl zwischen 10 und 150 verwendet werden.

6. Polyolefinschaum nach Ansprüchen 1 - 5, dadurch gekennzeichnet, daß Polyester mit einer Säurezahl zwischen 20 und 70 und einer OH-Zahl zwischen 20 und 100 verwendet werden.

## Claims

1. Dielectrically heatable, preferably weldable, polyolefin foams, characterized in that they contain from 3 to 20% by weight, based on the foam, of an α, β-unsaturated polyester.

2. Polyolefin foams as claimed in Claim 1, characterized in that they contain from 5 to 10% by weight of an α, β-unsaturated polyester.

3. Polyolefin foams as claimed in Claim 1 or 2, characterized in that up to 100% of the polyester is hardened.

4. Polyolefin foams as claimed in Claims 1 to 3. characterized in that they are crosslinked.

5. Polyolefin foarns as claimed in Ciaims 1 to 4, characterized in that polyesters having an acid number of from 10 to 100 and an OH-number of from 10 to 150 are used.

6. A polyolefin foam as claimed in Claims 1 to 5, characterized in that polyesters having an acid number of from 20 to 70 and an acid number of from 20 to 100 are used.

## Revendications

1. Mousses polyoléfiniques chauffables diélectriquement, de préférence soudables, caractérisées en ce qu'elles contiennent 3 à 20% en poids d'un polyester α, β-insaturé par rapport à la mousse.

2. Mousses polyoléfiniques selon la revendication 1, caractérisées en ce qu'elles contiennent 5 à 10% en poids d'un polyester α, β-insaturé.

3. Moussespolyoléfiniques selon la revendication 1 ou 2, caractérisées en ce que le polyester est durci à fond jusqu'à concurrence de 100%.

4. Mousses polyoléfiniques selon les revendications 1 à 3, caractérisées en ce qu'elles sont réticulées.

5. Mousses polyoléfiniques selon les revendications 1 à 4, caractérisées en ce qu'on utilise des polyesters ayant un indice d'acide entre 10 et 100 et un indice OH entre 10 et 150.

6. Mousse polyoléfinigue selon les revendications 1 à 5, caractérisée en ce qu'on utilise des polyesters ayant un indice d'acide entre 20 et 70 et un indice OH entre 20 et 100.